# EUROPEAN PATENT SPECIFICATION

(11) **EP 0 303 710 B1**
(45) Date of publication and mention of the grant of the patent: **08.05.1996**
(21) Application number: 88901923.8
(22) Date of filing: 19.02.1988
(51) Int. Cl.: D06C 23/04, B29C 33/38, B29C 51/30, B29C 51/42

(54) **METHOD OF FORMING THERMOPLASTIC FABRIC**
VERFAHREN ZUR BILDUNG EINES THERMOPLASTISCHEN GEWEBES
METHODE DE FORMATION DE TISSU THERMOPLASTIQUE

(30) Priority: 23.02.1987 JP 38154/87
(43) Date of publication of application: 22.02.1989
(73) Proprietor: NAMBA PRESS WORKS CO., LTD., Kurashiki-City Okayama Prefecture 711 (JP)
(72) Inventor: GOTO, Fumio, Kurashiki-City Okayama Prefecture 710-01 (JP); OGAWA, Taro, Kurashiki-City Okayama Prefecture 711 (JP)
(74) Representative: Allden, Thomas Stanley
(86) International application number: PCT/JP88/00176
(87) International publication number: WO 88/06198

(56) References cited:
- FR-A- 1 564 267
- GB-A- 2 015 916
- JP-A-51 132 163
- JP-A-60 189 419
- PATENT ABSTRACTS OF JAPAN vol. 10, no. 151 (M-483)(2208) May 31, 1986 & JP-A-613725 (NITSUSAN SHIYATAI K.K.)

## Description

This invention relates to a method of shaping thermoplastic materials.

It is well known that certain thermoplastic fibres such as polyester or polyamide (nylon 6 and 66) have both crystalline regions and non-crystalline (amorphus) regions therein. The non-crystalline region has a softening point lower than the melting point of the crystalline region. When thermoplastic fibres of this nature are heated up to the softening point of the non-crystalline region, the fibres will not lose their integrity since the crystalline regions continue to remain in their original shape. However, if heated up to or over the melting point of the crystalline region, the fibres will melt as a whole and lose their original shape, i.e., will be broken. In the apparel industry, this physical property of thermoplastic fibres such as polyester and polyamide is advantageously utilized for imparting so-called "permanent press" or permanent pleats to clothing. In addition, this property of thermoplastic fibres is utilized in the textile industry to set the fabric made of such thermoplastic fibres in a flattened and wrinkle-free condition through a heat selling procedure in order to permit following finishing processes to be performed easily and adequately on the flattend fabric.

in another aspect, such thermoplastic fabric can be used to form cover materials for foamed plastic articles such as automobile seats, seat cushions, headrests, armrests, or stuffed toys or dolls. In prior art techniques, the cover material can be formed by cut-ting the fabric into a desired shape and size, assembling pieces of cut fabric and sewing the same into a desired contour for a final product to be obtained. These procedures such as cutting, assembling and sewing the fabric to form the cover material capable of covering desired configurations of a final product are rather complicated, cumbersome, time-consuming and hence expensive. From the industrial and commercial view point, it is highly desirable that a method is provided capable of shaping such thermoplastic fabric or film in a flattened condition into desired three dimensional configurations through a single and simple procedure for heating and pressing.

Specifically, a method for fabricating automobile seats or headrests of the prior art comprises laying a cover fabric in a shaping mould having cavity surfaces corresponding to a final product's contour, mating the fabric with the cavity surfaces through external vacuum shaping pouring fluid polyurethane formulations onto the fabric configured as above, and allowing the formulations to foam and expand until it adheres to the inside surface of the fabric. In this method of the prior art, permeable material such as ordinary textile fabric cannot be used as a cover material because its permeability renders vacuuming procedure inoperable. Such permeable fabric must have an impermeable backing applied thereto if employed in the vaccum shaping process. Applying a backing to the cover material is, again, cumbersome and an expensive operation. Further, final products covered by such impermeable materials are void of comfortableness in use because they cannot absorb sweat or other moisture deposited on their surfaces. Moreover, forming the cover material into a desired configuration corresponding to the final contour through vaccum forming is not so simple and easy that unintended and undesirable malformation may occur in the cover material before pouring polyurethane fluid thereonto causing inferior goods to be produced in many instances.

Apart from the vacuum shaping process, a specially designed apparatus having means for heating and pressing the cover material would be required in order to shape the same into desired three dimentioanl configurations. Such apparatus, however, must be provided individually for different shapes and sizes of the final products anf cannot be used for manufacturing different products, e.g., automobile seats on the one hand, and headrests on the other hand. Individual provision of shaping apparatus for every different product requires excessive investment and is unacceptable to the industry.

Thus, such thermoplastic fabrics as polyester and polyamide, though having good thermal properties as mentioned above, have not had their potential abilities fully developed.

A further prior art method of shaping a thermoplastic material is generally disclosed in GB-A-2015916, the method comprising providing a liquid metallic bath of a eutectic mixture of metals and having a relatively high density, providing an upper mould having a three dimensional outer configuration substantially corresponding to the contour of the desired product, using the liquid metallic bath to apply pressure to the thermoplastic material to cause the thermoplastic material to follow the outer contour of the upper mould and be shaped accordingly, and withdrawing the upper mould from the inside of the shaped thermoplastic material.

More particularly, in the aforementioned generally disclosed method, a lower mould is provided having a cavity therein in which is disposed and secured a rubber diaphragm whose shape corresponds to the lower surface of the part to be produced. The lower mould is also constructed with a reservoir receiving a compressible liquid such as mercury. An activating cylinder is provided to raise and lower the upper mould relative to the lower mould. With the upper mould raised, the thermoplastic material which may be in sheet form is draped in the cavity to lie on the rubber diaphragm, and the upper mould is then lowered to close the mould. An electromagnetic energy source couples the upper and lower moulds to establish a potential difference therebetween to heat uniformly the thermoplastic material when the mould is closed, and a piston assembly is then utilized to exert pressure on the mercury which, in turn, applies a uniform pressure upon the flexible rubber diaphragm which again, in turn, conveys that pressure to the heated thermoplastic material to mould that material between the top mould and the diaphragm to the shape of the desired article.

It is an object of the present invention to provide a simplified method of shaping a thermoplastic material involving a less complex apparatus as compared with the known prior art examples discussed above and, moreover, one which is more versatile.

This object is met, in accordance with the present invention as claimed, in that the aforementioned generally disclosed method is characterised in that:
(a) the thermoplastic material is in the form of a cover material selected from a fabric composed of fibres having both crystalline and non-crystalline regions or a thermoplastic film having both crystalline and non-crystalline regions,
(b) the liquid metallic bath has a eutectic point at least equal to or higher than the softening point of the non-crystalline regions of the thermoplastic fabric or film,
(c) the liquid metallic bath is heated to a temperature higher than its eutectic point and lower than the melting point of the crystalline regions of the thermoplastic fibre or film,
(d) the thermoplastic fibre or film is supported in a flattened state above the liquid metallic bath for free downward movement,
(e) the upper mould is urged downwardly upon the thermoplastic fibre or film to immerse the thermoplastic fibre or film into the heated liquid metallic bath which thereby applies a pressure upon the thermoplastic fibre or film to cause the thermoplastic fibre or film to follow the outer configuration of the upper mould and be shaped accordingly, and
(f) the shaped thermoplastic fibre or film is removed from the liquid metallic bath along with the upper mould and is cooled.

The method of the invention is advantageous in that it is capable of shaping thermoplastic fabrics or films in a flattened state into a desired three dimensional configuration through a single heating and pressing step, and can be used to manufacture various products of different shapes and sizes with but minor changes in the apparatus necessary for carrying out the method, thereby having a high versatility as well as involving cost investment economy.

In the following description, both thermoplastic fabrics and films are referred to generically as "thermoplastic fabrics" hereinafter.

In practising a preferred method in accordance with the invention, a core member is employed which has a three dimensional configuration substantially corresponding to that of the final product to be obtained, e.g. a head-rest or seat cushion. This core may be called an "upper mould" in contrast to the liquid metallic bath which may be called a "fluidic lower mould." The core or upper mould member is made of a material which is durable to heat and pressure exerted by the hot and compressive molten metallic bath, and is preferably inexpensive, such as concrete. If a cover material of different shape and/or size is to be shaped, only the upper mould need be replaced accordingly, and the lower mould, i.e. the liquid metallic bath, can be utilized over a wide range of different products without any change.

In order to protect thermoplastic fabrics from being soiled or damaged through direct contact with molten hot metal mixtures, a protective sheet or fabric is desirably employed to cover and shield the fabrics from the metallic bath. The protective sheet may be made of material which has a sufficiently close and firm texture for preventing molten metallic mixtures from penetrating therethrough, and yet which is resilient and susceptible to transfer heat and pressure to the fabric to be shaped by the hot liquid metallic bath. Preferred materials to be used for the protective sheet in the invention include knitted fabric made of heat-resistant polyester and aromatic polyamide fibres sold under the trade mask Meraklon.

In the preferred method, the thermoplastic fabric is disposed in a wrinkle-free flattened condition on the protective sheet spread out above the liquid metallic bath. Then, the fabric together with the protective sheet is pushed down by the descending upper mould into the metallic bath to a required depth in the bath. The metallic bath, having a eutectic point of, e.g., 139°C or more and being heated to a temperature higher than the eutectic point and lover than the melting point of crystalline region of the thermoplastic fabric, imparts to the fabric heat corresponding to that temperature and, at the same time, strong compressive forces resulted form the density of the molten metal and the depth at which the fabric is immersed. Thus, the thermoplastic fabric is heated and pressed so as to follow accurately the outer cuntour of the upper mould.

When the fabric is sufficiently shaped, the upper mould holding the shaped fabric therearound is removed from the bath, after which the fabric is subjected to a cooling step to thereby fix the fabric in its given three dimensional configuration. As the fabric thus shaped has some degree of flexibility, the upper mould can easily be withdrawn from the enveloping shaped fabric thereby to produce a hollow, three-dimensionally shaped cover fabric.

In order that the present invention may be well understood the preferred embodiment thereof, given by way of example, will now be described with reference to the accompanying drawings, in which :
Figure 1 shows a hollow cover material formed and shaped according to the method of the invention for use in manufacturing a headrest;
Figure 2 illustrates a schematic sectional view of a shaping apparatus, used for carrying out the method of the invention,of which the main part comprises a liquid metallic bath;
Figure 3 shows a heating and pressing process performed in the apparatus of Figure 2; and
Figure 4 is a diagramatical enlarged view of a protective sheet employed in the heating and pressing method of the invention for protecting thermoplastic fabrics from being damaged by direct contact with the liquid metallic bath.

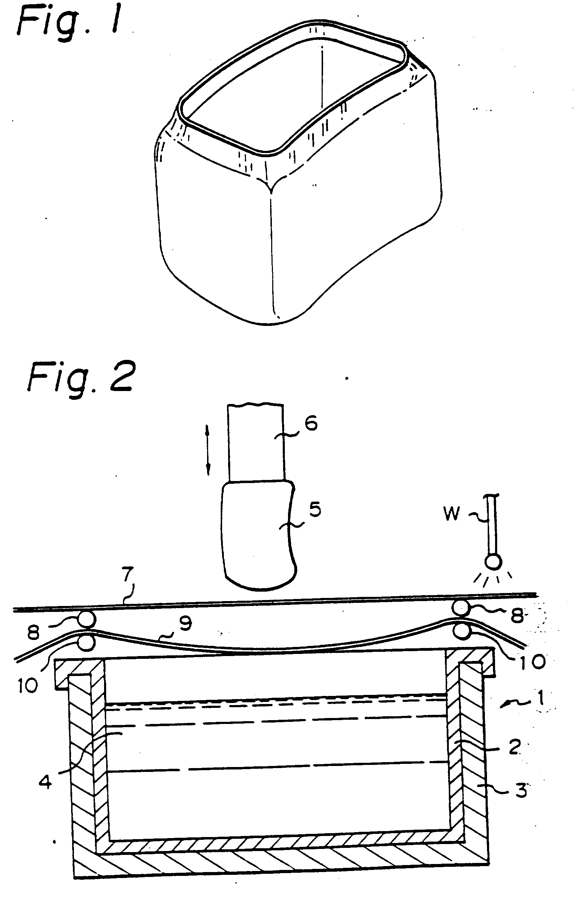

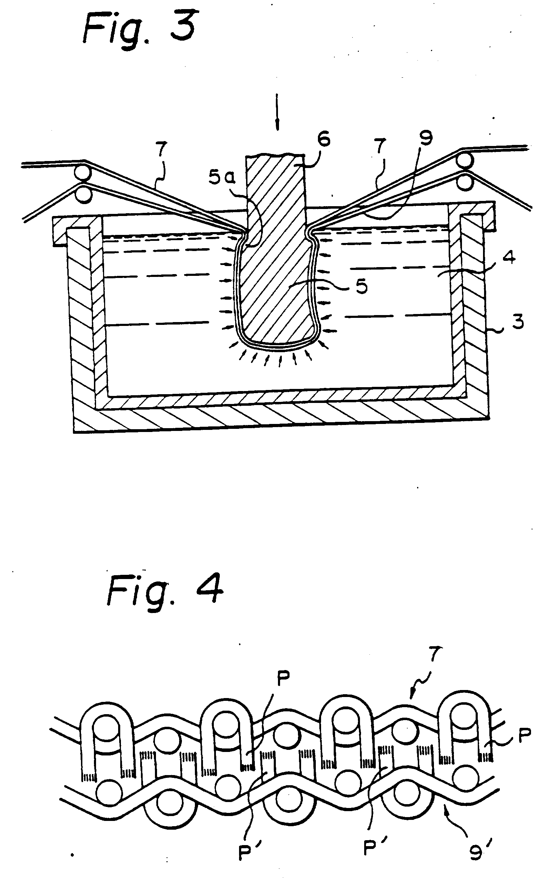

The invention will be described in respect of its product, i.e. a shaped cover fabric shown in Figure 1, and in respect of a method for manufacturing the shaped cover fabric in conjunction with Figures 2 and 3.

The method of the invention can produce various shaped articles from the thermoplastic fabric among which is included a shaped cover fabric for a headrest of the chair or seat as shown in Figure 1. Into this cover fabric, foamed polyurethane or other paddings will be charged to produce a desired final product. The cover fabric shown in Figure 1 is made of a woven orknitted fabric of polyester or polyamide fibres. Initially, the fabric is in a flattened state and has no capability to retain itself in a three dimensional configuration. When treated in the process of the invention, the fabric acquires shape retentivity by itself in a three dimensional shape as shown in Figure 1. The final product, i.e., headrest in this case, can be easily and economically manufactured by merely pouring into this shaped cover liquid or creamy substances, such as polyurethane, foamable with low pressure produced and allowing the substances to foam and expand to the full extent of the volume of the hollow shaped cover.

Referring now to Figures 2 and 3, the method for manufacturing the pre-shaped cover fabric will be described.

A shaping apparatus 1 is illustrated in Figure 2 which comprises an inner refractory wall 2, an outer rigid shell or vessel 3, and a hot liquid metallic bath 4 contained therein.

The liquid metallic bath 4 is composed of an eutectic mixture comprising metals selected from the group consisting of lead, tin, cadmium, zinc and bismuth. Practically, the eutectic mixture way be of binary, tertiary or quaternary mixtures from the foregoing 5 (five) metals. These metals all have high density and hence are able to exert, not only heat, but also high and strong compressive forces against the material immersed therein.

A preferable formulation for the metallic bath 4 is as follows:

| Components | % by weight |
|---|---|
| lead | 32 |
| tin | 45 |
| cadmium | 18 |
| bismuth | 5 |

This preferable formulation can form a liquid eutectic mixture at 139°C and have a highest density, which can apply uniform compressive or shaping forces against an object immersed therein and high heat energy at least equal to 139°C to that object. The compressive shaping forces are resultant from, on one hand, the density of liquid metal which is deemed substantially constant, say about 10 in case of the above-mentioned formulation, and, on the other hand,the depth at which the object is immersed in the liquid metal. For instance, at 10 cm deep in the illustrated metallic bath 4, a compressive shaping force of about 100 g/cm can be attained. Preferably, means for heating and maintaining the metallic bath in the liquid state way be provided on the vessel 3. Thus, the liquid metallic bath way be called a fluidic or flexible lower mould for shaping purposes.

The shaping apparatus 1 further comprises an upper mould or core member 5 downwardly movable into the bath 4. The upper mould 5 has an outer configuration substantially corrsponding to the contour of a desired final product, e.g., a headrest in the example shown. Against and around the outer surfaces of the mould 5 can be compressed any thermoplastic fabric under the influences of heat and pressure tranferred from the liquid metal 4. The upper mould 5 is tirade from heat-and-pressure-resistant and relatively inexpensive material, such as preferably concrete, which would not undergo thermal expansion and cracking even under the influence of the high heat and pressure exerted from the liquid metallic bath 4. The mould 5 is movably supported by a suitable hanging support member 6 as shown in Figure 2.

A thermoplastic fabric 7 to be shaped into the three dimensional configuration is spread out in a flattened state below the upper mould 5 and over the bath 4. The fabric 7 may be a knitted or woven fabric of polyester or polyamide fibres, or a thermoplastic film of a similar nature. In Figure 2, the fabric 7 is supported in a tensioned and wrinkle-free condition on guide rollers 8 and it can be freely moved down into the bath 4 by downward forces exerted by descending mould 5.

A protective fabric or sheet 9 is positioned over the bath 4 and beneath the fabric 7 by means of guide rollers 10 on which the sheet 9 together with the fabric 7 can freely be moved. The protective sheet 9, serving to protect the fabric 7 to be shaped from being soiled or damaged by direct contact with the liquid metal 4, should also have good thermal conductivity and resiliency enough to transfer heat and pressure from the bath 4 to the fabric 7 with minimum losses therethrough. In this respect, knitted fabric of heat-resistant polyester and aromatic polyamide fibres sold under the trade mark MERAKLON is deemed preferable for the protective sheet 9.

Means for applying water to the fabric 7 is disposed over the fabric and is designated by reference character W in Figure 2. Means W is movable horizontally over the fabric 7. Alternatively, the fabric 7 may be moved horizontally under the fixed water supply W.

The process for shaping the thermoplastic fabric is started by setting the fabric 7 in the flattened condition as in Figure 2 and then lowering the upper mould 5 against the fabric 7. The descending mould 5 causes the fabric 7 and the protective sheet 9 to be immersed gently in the liquid metallic bath 4. As shown in Figure 3, the descent of the mould 5 is continued until it reaches a desired depth, for example, at which a neck portion 5a of the mould 5 is submerged beneath the surface of the bath 4. The neck portion 5a substantially corresponds to a bottom portion of the desired final product, i.e., a headrest in this case. If greater shaping compressive forces are to be attained in the bath 4, then the upper mould 5 may be more deeply immersed in the bath 4.

The thermoplastic fabric 7 immersed in the bath 4 receives compressive forces as indicated by a plurality of minute arrows in Figure 3 substantially evenly on its entire surface and is forced to follow the outer configuration of the mould 5. At the same time, the fabric 7 is heated by the bath 4 at least to the eutectic point of the bath 4, e.g., 139°C, to cause its non-crystalline zones to be melted or at least softened.

The fabric 7 thus shaped by heat and pressure is then withdrawn from the bath 4 along with the protective sheet 9 and cooled as by blowing cold air thereagainst so as to fix its given three dimensional shape. The protective sheet 9 is reusable many times until it is broken.

When the given three dimensional shape is fixed, the upper mould 5 is withdrawn from within the shaped fabric. As the shaped fabric has some degree of resiliency, it allows the main portion of the mould 5 to be withdrawn through its necked portion without any difficulty and worry about destroying the given shape of the fabric. Then, cutting is made at or slightly above the necked portion of the now hollowed fabric 7 thereby to produce the three-dimensionally shaped hollow cover material for the headrest as shown in Figure 1.

The thermoplastic fabric 7 may be preliminarily applied with moisture as through the means W shown in Figure 2 for easy shaping. Upon immersing the fabric in the hot bath 4, moisture impregnated therein will be rapidly changed to steam and cause the fibres to be swollen whereby the fibres become more easily shaped. After hot shaping, the fabric is in dried condition and no moisture exists therein.

In the case that a woven or knitted fabric of polyester or poly amide fibres is to be shaped according to the invention, the fabric should be advantageously one which has not experienced a heat setting procedure because it has less stresses or strains in its non-crystalline regions which otherwise would result from preliminary heat setting process. Thermoplastic fabrics not subjected to a preliminary heat set are more susceptible to be shaped into a desired configuration under heat and pressure from the liquid metallic bath. Dyeing and various finishing operations other than heat setting are permitted to be performed on the thermoplastic fabric to be treated according to the invention.

In the event that a pile fabric is to be treated by the method of the invention, it is advantageously protected by a protective sheet 9' having the same piles on its surface as schematically illustrated in Figure 4. The piled protective sheet 9' has a plurality of piles P' which are opposed to and inserted among the piles P of the fabric 7. Thus, the piles P will not be so crushed during the heating and pressing procedure by the hot liquid metallic bath 4 and the fabric 7 can well retain virtually its softness in touch.

The described method of shaping by means of the liquid metallic bath can also be applied to thermoplastic films, which heretofore have been shaped or moulded through the use of heating apparatus and/or vacuum moulding apparatus. By utilizing the present liquid metallic bath process, such films can be economically and advantageously shaped through the single immersion process. In apparatus used heretofore, numerous different moulds for shaping fabrics must be provided for every product of different size and shape including both the upper and lower moulds. Moreover, the vacuum moulding machine itself used heretofore is essentially very expensive as it consists of many complicated components and other accessories.

In contrast, the present single and simple liquid metallic bath process is applicable as a common lower mould with respect to many products of different size and shape, and only the upper mould or core member need be replaced for adaptation to different sizes and shapes. Moreover, the upper mould used in the present process can be made from easily available and relatively inexpensive materials such as, for example, concrete.

Advantages attained by the fluidic lover mould (metallic bath) reside in that the liquid metal can easily follow any concaved or recessed portions formed by the upper mould surface, and that it can apply both heat and pressure to the fabric to be shaped without the necessity for complicated and expensive pressurizing or vacuuming apparatus and heating blocks usually needed separately from the pressurizing apparatus. Even if the upper moulds used in the present process have enlarged base portions such as inverted V shape moulds, they can be smoothly immersed into the fluidic lower mould and withdrawn therefrom without substantial resistance as the fluidic lower mould (metallic bath) is highly flexible and easily deformable.

In addition, in the case that thermoplastic films are to be shaped according to the invention, cover materials of more uniform thickness than heretofore obtained can be produced as the films immersed in the metallic bath receive evenly and uniformly compressive forces around their entire surface.

From the foregoing description, it will be noted that woven and knitted fabrics as well as films made of thermoplastics such as polyester and polyamide can be processed from their original flattened states through the single heat-and-pressure-applying step into desired three dimensional configurations. The present described method exhibits a high degree of versatility and is far more economical than that heretofore used. Cumbersome operations such as cutting fabrics, assembling cut pieces of fabric, and sewing them into desired shape can totally be omitted by this invention, and subsequent operations such as pouring polyurethane fluid into the pre-shaped covers can be easily performed as the pre-shaped covers have intrinsic shape retentivity.

## Claims

1. A method of shaping a thermoplastic material (7), comprising providing a liquid metallic bath (4) of a eutectic mixture of metals and having a relatively high density, providing an upper mould (5) having a three dimensional outer configuration substantially corresponding to the contour of the desired product, using the liquid metallic bath (4) to apply pressure to the thermoplastic material (7) to cause the thermoplastic material (7) to follow the outer contour of the upper mould (5) and be shaped accordingly, and withdrawing the upper mould (5) from the inside of the shaped thermoplastic material (7); characterised in that:
(a) the thermoplastic material (7) is in the form of a cover material selected from a fabric composed of fibres having both crystalline and non-crystalline regions or a thermoplastic film having both crystalline and non-crystalline regions,
(b) the liquid metallic bath (4) has a eutectic point at least equal to or higher than the softening point of the non-crystalline regions of the thermoplastic fabric or film (7),
(c) the liquid metallic bath (4) is heated to a temperature higher than its eutectic point and lower than the melting point of the crystalline regions of the thermoplastic fibre or film (7),
(d) the thermoplastic fibre or film (7) is supported in a flattened state above the liquid metallic bath (4) for free downward movement,
(e) the upper mould (5) is urged downwardly upon the thermoplastic fibre or film (7) to immerse the thermoplastic fibre or film (7) into the heated liquid metallic bath (4) which thereby applies a pressure upon the thermoplastic fibre or film (7) to cause the thermoplastic fibre or film (7) to follow the outer configuration of the upper mould (5) and be shaped accordingly, and
(f) the shaped thermoplastic fibre or film (7) is removed from the liquid metallic bath (4) along with the upper mould (5) and is cooled.

2. A method as claimed in Claim 1, wherein a protective sheet (9) is employed between the cover material (7) and the liquid metallic bath (4).

3. A method as claimed in Claim 2, wherein the cover material (7) is of pile fabric and the protective sheet (9) is also of piled material having opposing piles on its surface toward the pile fabric.

4. A method as claimed in Claim 2, wherein the protective sheet (9) is a knitted fabric having a close texture made of polyester and polyamide fibres.

5. A method as claimed in any of the preceding claims, wherein the thermoplastic fabric or film (7) is moistened prior to immersion in the liquid metallic bath (4).

6. A method as claimed in any of the preceding claims, wherein cooling is performed by blowing air upon the shaped thermoplastic fabric or film (7) removed from the liquid metallic bath (4).

7. A method as claimed in any of the preceding claims, wherein the liquid metallic bath (4) comprises a eutectic mixture of metals selected from the group consisting of lead, tin, cadmium, zinc and bismuth.

8. A method as claimed in Claim 7, wherein the liquid metallic bath (4) comprises an eutectic mixture composed of lead, tin, cadmium and bismuth and having an eutectic point of 139°C.

9. A method as claimed in any of the preceding claims, wherein the upper mould (5) is a concrete block.

10. A method as claimed in any of the preceding claims, wherein the cover material (7) is a woven or knitted fabric of polyester or polyamide fibres.

## Patentansprüche

1. Verfahren zur Bildung eines thermoplastischen Materials (7), mit den Schritten: Bereitstellen eines Flüssigmetallbades (4) einer eutektischen Mischung aus Metallen und mit einer relativ hohen Dichte, Bereitstellen einer oberen Form (5) mit einer dreidimensionalen äußeren Ausgestaltung, die im wesentlichen der Kontur des gewünschten Produktes entspricht, Verwenden des Flüssigmetallbades (4) zum Aufbringen eines Druckes auf das thermoplastische Material (7), um das thermoplastische Material (7) zu veranlassen, sich der äußeren Kontur der oberen Form (5) anzupassen und demgemäß gebildet zu werden, und Zurückziehen der oberen Form (5) aus dem Inneren des gebildeten thermoplastischen Materials (7); dadurch gekennzeichnet, daß:
(a) das thermoplastische Material (7) in Form eines Abdeckungsmaterials vorliegt, welches aus einem Gewebe, das aus Fasern mit sowohl kristallinen als auch nicht-kristallinen Bereichen zusammengesetzt ist, oder einem thermoplastischen Film ausgewählt ist, der sowohl kristalline als auch nichtkristalline Bereiche aufweist,
(b) das Flüssigmetallbad (4) einen eutektischen Punkt aufweist, der entweder gleich dem Erweichungspunkt der nicht-kristallinen Bereiche des thermoplastischen Gewebes oder Films (7) oder höher ist,
(c) das Flüssigmetallbad (4) auf eine Temperatur erwärmt wird, die höher ist als dessen eutektischer Punkt und niedriger ist als der Schmelzpunkt der kristallinen Bereiche der thermoplastischen Faser oder des thermoplastischen Films (7),
(d) die thermoplastische Faser oder der thermoplastische Film (7) in einem abgeflachten Zustand über dem Flüssigmetallbad (4) abgestützt ist, um sich frei nach unten bewegen zu können,
(e) die obere Form (5) nach unten auf die thermoplastische Faser oder den thermoplastischen Film (7) gepreßt wird, um die thermoplastische Faser oder den thermoplastischen Film (7) in das erwärmte Flüssigmetallbad (4) einzutauchen, welches hierdurch einen Druck auf die thermoplastische Faser oder den thermoplastischen Film (7) ausübt, um die thermoplastische Faser oder den thermoplastischen Film (7) zu veranlassen, sich der äußeren Ausgestaltung der oberen Form (5) anzupassen und demgemäß gebildet zu werden, und
(f) die gebildete thermoplastische Faser oder der gebildete thermoplastische Film (7) zusammen mit der oberen Form (5) aus dem Flüssigmetallbad (4) entfernt und abgekühlt wird.

2. Verfahren nach Anspruch 1, wobei eine Schutzschicht (9) zwischen dem Abdeckungsmaterial (7) und dem Flüssigmetallbad (4) verwendet wird.

3. Verfahren nach Anspruch 2, wobei das Abdeckungsmaterial (7) aus Florgewebe und die Schutzschicht (9) ebenfalls aus Flormaterial besteht, welches auf seiner dem Florgewebe zugewandten Seite entgegengesetzte Flore aufweist.

4. Verfahren nach Anspruch 2, wobei die Schutzschicht (9) ein gewirktes Gewebe mit einer dichten bzw. engen Struktur aus Polyester- und Polyamidfasern ist.

5. Verfahren nach einem der vorhergehenden Ansprüche, wobei das thermoplastische Gewebe oder der thermoplastische Film (7) vor dem Eintauchen in das Flüssigmetallbad (4) befeuchtet wird.

6. Verfahren nach einem der vorhergehenden Ansprüche, wobei der Kühlschritt durch Blasen von Luft auf das gebildete thermoplastische Gewebe oder den gebildeten thermoplastischen Film (7) durchgeführt wird, das bzw. der aus dem Flüssigmetallbad (4) entfernt worden ist.

7. Verfahren nach einem der vorhergehenden Ansprüche, wobei das Flüssigmetallbad (4) eine eutektische Mischung aus Metallen aufweist, die aus der Gruppe bestehend aus Blei, Zinn, Cadmium, Zink und Wismuth besteht.

8. Verfahren nach Anspruch 7, wobei das Flüssigmetallbad (4) eine eutektische Mischung aufweist, die aus Blei, Zinn, Cadmium und Wismuth zusammengesetzt ist und einen eutektischen Punkt von 139°C aufweist.

9. Verfahren nach einem der vorhergehenden Ansprüche, wobei die obere Form (5) ein Betonblock ist.

10. Verfahren nach einem der vorhergehenden Ansprüche, wobei das Abdeckungsmaterial (7) ein gewebtes oder gewirktes Gewebe aus Polyester- oder Polyamidfasern ist.

## Revendications

1. Procédé de mise en forme d'une matière thermoplastique (7), comprenant la fourniture d'un bain métallique liquide (4) comprenant un mélange eutectique de métaux et ayant une densité relativement élevée, la fourniture d'un moule supérieur (5) ayant une configuration tridimensionnelle externe correspondant sensiblement au contour du produit désiré, l'utilisation du bain métallique liquide (4) pour appliquer une pression sur la matière thermoplastique (7) pour amener la matière thermoplastique (7) à épouser le contour externe du moule supérieur (5) et à être mise en forme de façon correspondante, et le retrait du moule supérieur (5) de l'intérieur de la matière thermoplastique mise en forme (7) ; caractérisé en ce que :
(a) la matière thermoplastique (7) a la forme d'un tissu de housse sélectionné parmi un tissu composé de fibres ayant des régions cristallines et non cristallines ou un film thermoplastique ayant des régions cristallines et non cristallines,
(b) le bain métallique liquide (4) a un point eutectique au moins égal ou supérieur au point de ramollissement des régions non cristallines du tissu ou du film thermoplastique (7),
(c) le bain métallique liquide (4) est chauffé à une température supérieure à son point eutectique et inférieure au point de fusion des régions cristallines de la fibre ou du film thermoplastique (7),
(d) la fibre ou le film thermoplastique (7) est porté à l'état aplati au-dessus du bain métallique liquide (4) en vue d'un mouvement descendant libre,
(e) le moule supérieur (5) est descendu sur la fibre ou le film thermoplastique (7) pour immerger la fibre ou le film thermoplastique (7) dans le bain métallique liquide chauffé (4), lequel applique ainsi une pression sur la fibre ou le film thermoplastique (7) pour amener la fibre ou le film thermoplastique (7) à épouser la configuration externe du moule supérieur (5) et à être mis en forme de façon correspondante et
(f) la fibre ou le film thermoplastique mis en forme (7) est retiré du bain métallique liquide (4) avec le moule supérieur (5) et est refroidi.

2. Procédé selon la revendication 1, dans lequel une feuille protectrice (9) est utilisée entre le tissu de housse (7) et le bain métallique liquide (4).

3. Procédé selon la revendication 2, dans lequel le tissu de housse (7) est un tissu à poils et la feuille protectrice (9) est également en tissu à poils ayant des poils opposés sur sa surface dirigée vers le tissu à poils.

4. Procédé selon la revendication 2, dans lequel la feuille protectrice (9) est un tricot ayant une texture dense en fibres de polyester et de polyamide.

5. Procédé selon l'une quelconque des revendications précédentes, dans lequel le tissu ou le film thermoplastique (7) est humidifié avant l'immersion dans le bain métallique liquide (4).

6. Procédé selon l'une quelconque des revendications précédentes, dans lequel le refroidissement est effectué par soufflage d'air sur le tissu ou le film thermoplastique mis en forme (7) retiré du bain métallique liquide (4).

7. Procédé selon l'une quelconque des revendications précédentes, dans lequel le bain métallique liquide (4) comprend un mélange eutectique de métaux sélectionnés dans le groupe constitué par le plomb, l'étain, le cadmium, le zinc et le bismuth.

8. Procédé selon la revendication 7, dans lequel le bain métallique liquide (4) comprend un mélange eutectique composé de plomb, d'étain, de cadmium et de bismuth et ayant un point eutectique de 139°C.

9. Procédé selon l'une quelconque des revendications précédentes, dans lequel le moule supérieur (5) est un bloc de béton.

10. Procédé selon l'une quelconque des revendications précédentes, dans lequel le tissu de housse (7) est un tissu tissée ou tricot en fibres de polyester ou de polyamide.
